# EUROPEAN PATENT APPLICATION

(11) **EP 4 498 582 A1**
(43) Date of publication of application: **29.01.2025**
(21) Application number: 23794938.3
(22) Date of filing: 30.03.2023
(51) Int. Cl.: H02K 11/40

(54) **MOTOR AND ELECTRIC DRIVE SYSTEM**

(30) Priority: 24.04.2022 CN 202221006465 U
(71) Applicant: Jing-Jin Electric Technologies Co., Ltd., Beijing 100015 (CN)
(72) Inventor: ZHANG, Liang, Beijing 100015 (CN); LIU, Xia, Beijing 100015 (CN); HAO, Ziqiang, Beijing 100015 (CN); LING, Xinliang, Beijing 100015 (CN); WANG, Haibin, Beijing 100015 (CN)
(74) Representative: Naeven, Ralf
(86) International application number: PCT/CN2023/085068
(87) International publication number: WO 2023/207503

(57) **Abstract**

A motor and an electric drive system are proposed. The motor comprises a motor shaft (6), a motor end cover (7), a conductive part (4), an elastic body (2) and a fastener (1). A top hole (5) is provided at an end of the motor shaft (6). A passage (9) is provided in the motor end cover (7), and the passage (9) faces the top hole (5). The conductive part (4) is installed in the passage (9) and abuts against an inner ring of the top hole (5). The elastic body (2) is installed in the passage (9) and abuts against the conductive part (4). The fastener (1) abuts against the elastic body (2) and is connected to the passage (9), and is used to conduct out a shaft current induced by the motor shaft (6) to the motor end cover (7) through the conductive part (4), the elastic body (2) and the fastener (1) in sequence. According to the utility model, the shaft current can be conducted out by means of the conductive part (4) and the inner ring of the top hole (5), and the motor shaft (6) can also achieve a certain area of contact during the rotation, and the effect of eliminating the shaft current is good. The utility model also proposes an electric drive system.

## Description

### CROSS REFERENCING OF RELATED APPLICATIONS

This application claims priority from the Chinese utility model patent application No. 202221006465.4 filed with the Chinese Patent Office on May 5, 2022 and entitled "Motor and Electric Drive System", the content of which is hereby incorporated by reference in its entirety.

### TECHNICAL FIELD

The present utility model belongs to the technical field of motors, and specially relates to automotive motors.

### BACKGROUND

When a motor of a new energy vehicle works, there is a potential difference, i.e., a shaft voltage, between two ends of the motor shaft or between the motor shaft and the housing. When the insulation between the motor shaft and the housing is damaged, the shaft voltage will break through the insulation and generate a considerable shaft current.

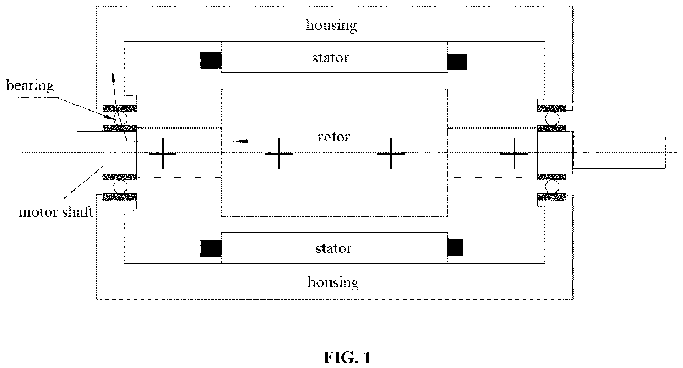

In the prior art, referring to FIG. 1, due to the action of an external frequency converter, an induced electromotive force generated on the motor rotor shaft is higher than that generated on the housing. When the voltage exceeds a value that the bearing oil film can withstand, discharge will occur at the weakest point, so that the oil film is broken through, and the rotor is in a conductive state with the bearing and the housing, thereby causing damage to the bearing. The direction of the arrow in FIG. 1 is the direction of the current flow after breakdown. At present, a method used in new energy vehicle motors to prevent the shaft current is to use insulating bearings. The balls of the bearings are coated with insulating oil film to block the shaft current from passing through the motor shaft. However, since there is still a potential difference between the housing and the motor shaft, corrosion will still occur at the output end of the motor shaft. Therefore, an improvement is to use conductive grease or shaft grounding brushes on the bearings to conduct the shaft current out to the housing. The housing is grounded, so the housing and the motor shaft are at an equal potential to avoid electrical corrosion.

In the process of realizing the utility model, the inventor found that there were at least the following problems in the prior art: both the conductive grease and the shaft grounding brush are relatively expensive, although they can achieve the effect of conducting the shaft current out.

### SUMMARY

In view of the above problems, the utility model discloses a motor and an electric drive system to overcome the above problems or at least partially solve the above problems.

In order to achieve the above object, the utility model adopts the following technical solutions.

A first aspect of the utility model discloses a motor comprising a motor shaft and a motor end cover, wherein a top hole is provided at an end of the motor shaft; a passage is provided in the motor end cover, the passage faces the top hole, and the motor further comprises:
a conductive part that is installed in the passage, and an end of the conductive part abuts against an inner ring of the top hole;
an elastic body that is installed in the passage, and an end of the elastic body abuts against the other end of the conductive part; and
a fastener that abuts against the other end of the elastic body and is connected to the passage, and is used to conduct out a shaft current induced by the motor shaft to the motor end cover through the conductive part, the elastic body and the fastener in sequence.

Optionally, the top hole is a plain hole, a screw hole or a countersunk hole.

Optionally, an axis of the top hole and an axis of the motor shaft are on a same straight line.

Optionally, a cavity is provided on a side of the fastener that is close to the motor end cover, and the elastic body abuts against the cavity.

Optionally, the elastic body is a spring or conductive rubber.

Optionally, a part of the conductive part that abuts against the inner ring of the top hole is of a shape of a sphere, a cone or a truncated cone.

Optionally, the conductive part is a sphere, a cone or a truncated cone as a whole.

Optionally, there is a gap between the end of the motor shaft and the motor end cover.

Optionally, the motor further comprises a fixing sleeve, wherein a first section of the fixing sleeve forms an interference fit with the passage, and a second section of the fixing sleeve extends into the cavity.

Optionally, there is a gap between the second section of the fixing sleeve and the bottom of the cavity.

A second aspect of the utility model discloses an electric drive system comprising the motor as described in the first aspect above.

The advantages and beneficial effects of the present utility model are as follows.

According to the motor of the utility model, the shaft current is conducted out by means of the conductive part and the inner ring of the top hole, and the motor shaft can also achieve a certain area of contact during the rotation, and thus the effect of eliminating the shaft current is good. The utility model uses an elastic body, and when the motor shaft moves axially, the conduction can also be achieved due to the elasticity of the elastic body, and the reliability is high. The utility model has a simple structure and low cost.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present utility model. Moreover, throughout the drawings, the same reference numerals are used to denote the same components. In the drawings:
FIG. 1 is a schematic diagram of the structure of a motor in a new energy vehicle in the prior art; and
FIG. 2 is a schematic diagram of the structure of a motor according to an embodiment of the utility model.

In the drawings: 1, fastener; 2, elastic body; 3, fixing sleeve; 4, conductive part; 5, top hole; 6, motor shaft; 7, motor end cover; 8, locking nut; 9, passage; 10, cavity.

### DETAILED DESCRIPTION

In order to make the object, technical solutions, and advantages of the present utility model clearer, the present utility model will be described clearly and completely in conjunction with the specific embodiments and corresponding drawings. Obviously, the embodiments described are only part of rather than all of the embodiments of the present utility model. Based on the embodiments in the present utility model, all other embodiments obtained by those of ordinary skill in the art without paying creative effort shall fall within the protection scope of the present utility model.

It should be understood that the terms "comprise/include", "consist of" or any other variants are intended to cover non-exclusive inclusion, so that the product, apparatus, process or method including a series of elements may not only include those elements, but may also include other elements not stated explicitly, or elements inherent to the product, apparatus, process or method. Without more limitations, an element defined by the phrase "comprise/include" or "consist of" does not exclude the case that there are other same elements in the product, apparatus, process or method including the element.

It should also be understood that, orientation or positional relationship indicated by the terms "upper", "lower", "front", "rear", "left", "right", "top", "bottom", "inside", "outside", etc. are orientation or positional relationship based on the drawings, which are merely for convenience of describing the present utility model and simplifying the description, rather than indicating or implying that the device, component or structure referred to must have a specific orientation, or must be constructed and operated with a specific orientation, they should not be construed as limiting the present utility model.

In this embodiment, the right is the front and the left is the rear.

In the present utility model, unless otherwise specified and defined, the terms such as "install", "connect", "attach", "fix" should be understood in a broad sense, for example, it may be fixedly connected, or detachably connected, or integrally connected; it may also be mechanically connected, or electrically connected; it may be directly connected or indirectly connected through a middleware; it may also be internally communicated or interacted between two components. For a person of ordinary skill in the art, the specific meaning of these terms in the present utility model should be understood according to specific situations.

The technical solutions provided by the embodiments of the present utility model will be described in detail below in conjunction with the accompanying drawings.

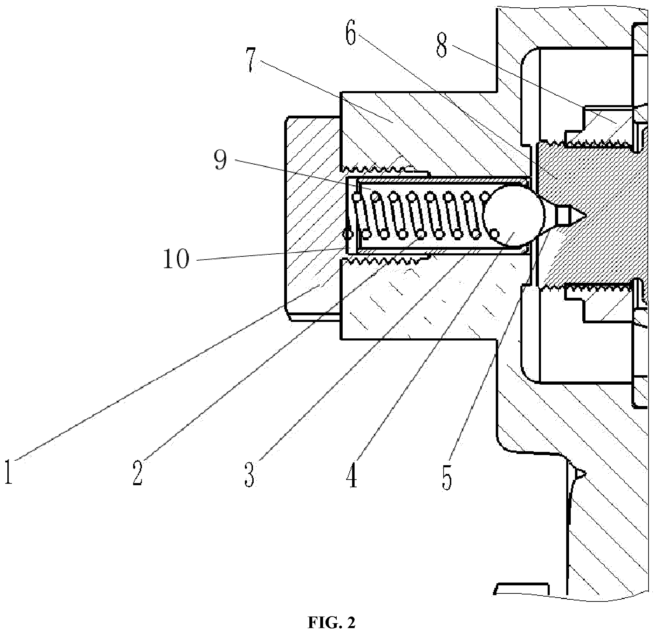

FIG. 2 is a schematic diagram of the structure of a motor according to an embodiment of the utility model. Referring to FIG. 2, the motor comprises a fastener 1, an elastic body 2, a conductive part 4, a motor shaft 6 and a motor end cover 7. A top hole 5 is provided at the end of the motor shaft 6. A passage 9 is provided in the motor end cover 7, and the passage 9 faces the top hole 5. The conductive part 4 is installed in the passage 9, and an end of the conductive part 4 abuts against an inner ring of the top hole 5. The elastic body 2 is installed in the passage 9, and the elastic body 2 abuts against the other end of the conductive part 4. The fastener 1 abuts against the elastic body 2 and is connected to the passage 9, and is used to compress the elastic body 2, so that a shaft current induced by the motor shaft 6 is conducted out to the motor end cover 7 through the conductive part 4, the elastic body 2 and the fastener 1 in sequence. The bearing on the motor shaft 6 is axially positioned by the locking nut 8.

It should be noted that the shape of the conductive part 4 is preferably spherical and made of a non-deformable material, such as a metal alloy.

The motor end cover 7 is a back cover installed on the back side of the motor housing and is a structural part connecting the rotor and the base. The shape of the passage 9 can be designed according to actual needs. The shape of the passage 9 is preferably straight. The part of the conductive part 4 that abuts against the inner ring of the top hole 5 is smooth to reduce the friction generated during the rotation of the motor shaft 6. The elastic body 2 has the characteristics of being able to bend and stretch, and can adapt to different shapes of the passage 9. The elastic body 2 is made of a conductive material, the first end of the elastic body 2 abuts against the conductive part 4, and the second end of the elastic body 2 abuts against the fastener 1.

In the motor of according to the embodiment of the utility model, the shaft current is conducted out by means of the conductive part and the inner ring of the top hole, the conductive part can be compressed to avoid the movable gap of the conductive part during the rotation of the motor shaft, thereby ensuring a certain area of contact between the conductive part and the top hole, and having a good effect of eliminating the shaft current. According to the utility model, when the motor shaft moves axially, the conduction can also be achieved due to the elasticity of the elastic body, and the reliability is high.

In some embodiments, when the passage 9 is a straight passage, the axis of the top hole 5 and the axis of the motor shaft 6 are on the same straight line, so that the lateral swaying of the conductive part 4 can be reduced when the motor shaft 6 rotate. The top hole 5 is drilled during the processing of the motor shaft 6, and its main function is to support and position the the motor shaft 6 so as to prevent the motor shaft 6 from lateral swaying during processing, and increase the rigidity of the motor shaft 6 during processing. The top hole 5 can be a plain hole, a screw hole or a countersunk hole. The plain hole is a hole with a smooth inner ring and without threads, knurling, wire drawing, etc. The screw hole is a hole with an internal thread. The countersunk hole is a stepped hole in which the head of a fastener is completely sunk into the hole. The top hole 5 may also be a circular hole in other forms, which can be set according to actual needs and is not specifically limited here. In this embodiment, the main function of the top hole 5 is to conduct the shaft current. As an optional means, the inner ring of the top hole 5 has a chamfer. The chamfer can surround a part of the conductive part 4, so that the top hole 5 and the conductive part 4 abut more firmly against each other.

In some embodiments, a cavity 10 is provided on a side of the fastener 1 that is close to the motor end cover 7, and the elastic body 2 abuts against the cavity 10. The fastener 1 needs to be made of a conductive material. The inner diameter of the cavity 10 is larger than the outer diameter of the elastic body 2, and the elastic body 2 can extend into the cavity 10 to avoid lateral swaying. It can be understood that the length of the elastic body 2 in the natural state is greater than the distance from the cavity 10 to the conductive part 4. After the elastic body 2 is compressed, the reliability of the conductive contact can be improved by applying pressure to both ends. The fastener 1 is detachably connected to the motor end cover 7. For example, the fastener can be a screw plug, which is threadedly connected to the passage 9 in the motor end cover 7. The elastic body 2 can be a spring or conductive rubber. Considering the wear resistance, the elastic body 2 is preferably a spring.

In some embodiments, the part of the conductive part 4 that abuts against the inner ring of the top hole 5 is at least one of the following: a sphere, a cone, and a truncated cone. When the shape of the part of the conductive part 4 that abuts against the inner ring of the top hole 5 is a sphere, a circular ring on the sphere abuts against the inner ring of the top hole 5. When the shape of the abutting portion is a cone, the top point of the cone points to the top hole 5, and a ring on the side surface of the cone abuts against the inner ring of the top hole 5. Similarly, when the shape of the abutting portion is a truncated cone, the generatrix extension line of the truncated cone points to the top hole 5, and a ring on the side surface of the truncated cone abuts against the inner ring of the top hole 5. The shape of other part of the conductive part 4 that does not abut against the inner ring of the top hole 5 can be designed according to actual needs.

In some embodiments, the conductive part 4 is a sphere, a cone, or a truncated cone as a whole. These three shapes can make the inner ring of the top hole abut against the conductive part, and a spherical surface or a side surface of the conductive part 4 abuts against the inner ring of the top hole 5, thereby reducing the wear of the conductive part and the top hole 5.

In some embodiments, the inner ring of the top hole can be designed to be a shape that matches the conductive part. For example, if the conductive part 4 is a sphere as a whole, the inner ring of the top hole can be designed as a spherical surface adapted to the sphere. If the conductive part 4 is a cone as a whole, the inner ring of the top hole can be designed as a conical surface adapted to the cone. When the shape of the inner ring of the top hole matches the conductive part, the contact area between the inner ring of the top hole and the conductive part is larger, and the effect of eliminating the shaft current is better.

In some embodiments, the motor further comprises a fixing sleeve 3, a first section of the fixing sleeve 3 form an interference fit with the passage 9, and a second section of the fixing sleeve 3 extends into the cavity 10. Both ends of the fixing sleeve 3 have openings. The fixing sleeve 3 can play a role in limiting the radial lateral swaying of the elastic body 2 and the conductive part 4. The fixing sleeve 3 can be made of a conductive material. There is a gap between the second end of the fixing sleeve 3 and the bottom of the cavity 10, the inner diameter of the fixing sleeve 3 is close to or the same as the outer diameter of the conductive part, the second section of the fixing sleeve 3 can effectively prevent the radial lateral swaying of the conductive part, and the shaft current on the motor shaft 6 can be conducted out through the conductive part 4.

In some embodiments, there is a gap between the second end of the fixing sleeve 3 and the bottom of the cavity 10. The gap can prevent the problem that the fastener 1 cannot completely fit the end face of the motor end cover 7 when the fastener 1 is connected to the motor end cover 7.

The installation process of the structure for reducing the shaft current in the motor provided in the above embodiment is as follows. The fixing sleeve 3 is inserted into the passage 9 without abutting against the end face of the motor shaft 6, then the conductive part 4 and the elastic body 2 are put into the fixing sleeve 3, and finally the elastic body 2 is pressed into the passage 9 by the fastener 1, and fastener 1 is tightened into the passage 9. When a higher induced electromotive force is generated on the motor shaft relative to the motor end cover, since the conductive part, the elastic body and the fastener are all conductors, the motor shaft can be conductively connected to the motor end cover can be conducted to conduct out the shaft current.

The motor according to the above embodiment requires fewer components and is easy to be installed. When the performance of any component deteriorates, it is not necessary to replace the entire shaft current reduction structure, and the replacement cost is low. The top hole has a certain contact area with the motor shaft, rather than a contact point, and the effect of eliminating the shaft current is good. Due to the elasticity of the elastic body, even if the motor shaft moves axially, the conductive part can be pressed against the top hole by means of the compression of the elastic body and keep the shaft current flowing smoothly, which has the advantage of high reliability.

In order to further reduce the number of components, in an embodiment of the present utility model, any two or all of the fastener 1, the elastic body 2 and the conductive part 4 can be an integral structure. For example, the fastener 1 is connected to an end of the elastic body 2; the elastic body 2 is connected to an end of the conductive part 4; the fastener 1, the elastic body 2 and the conductive part 4 are an integral structure. The installation steps can be simplified by reducing the number of components.

Based on the above purpose, the second aspect of the present utility model provides an electric drive system comprising a motor as described above. The structure of other parts of the electric drive system can refer to the prior art and will not be described in detail herein. The embodiment of the electric drive system can achieve the same or similar effect as any of the above embodiments of motor corresponding thereto.

The above is only embodiments of the present utility model and is not intended to limit the scope of the present utility model. Any modifications, equivalent substitutions, improvements, extensions, etc. made within the spirit and principle of the present utility model should all fall into the protection scope of the present utility model.

## Claims

1. A motor, comprising a motor shaft (6) and a motor end cover (7), **characterized in that**: a top hole (5) is provided at an end of the motor shaft (6); a passage (9) is provided in the motor end cover (7), the passage (9) faces the top hole (5), and the motor further comprises:
a conductive part (4) that is installed in the passage (9), and an end of the conductive part (4) abuts against an inner ring of the top hole (5);
an elastic body (2) that is installed in the passage (9), and an end of the elastic body (2) abuts against the other end of the conductive part (4); and
a fastener (1) that abuts against the other end of the elastic body (2) and is connected to the passage (9), and is used to conduct out a shaft current induced by the motor shaft (6) to the motor end cover (7) through the conductive part (4), the elastic body (2) and the fastener (1) in sequence.

2. The motor according to claim 1, **characterized in that**: the top hole (5) is a plain hole, a screw hole or a countersunk hole.

3. The motor according to claim 1, **characterized in that**: an axis of the top hole (5) and an axis of the motor shaft (6) are on a same straight line.

4. The motor according to claim 1, **characterized in that**: a cavity (10) is provided on a side of the fastener (1) that is close to the motor end cover (7), and the elastic body (2) abuts against the cavity (10).

5. The motor according to claim 1, **characterized in that**: the elastic body (2) is a spring or conductive rubber.

6. The motor according to claim 1, **characterized in that**: a part of the conductive part (4) that abuts against the inner ring of the top hole (5) is of a shape of a sphere, a cone or a truncated cone.

7. The motor according to claim 1, **characterized in that**: the conductive part (4) is a sphere, a cone or a truncated cone as a whole.

8. The motor according to claim 4, further comprising a fixing sleeve (3), **characterized in that**: a first section of the fixing sleeve (3) forms an interference fit with the passage (9), and a second section of the fixing sleeve (3) extends into the cavity (10).

9. The motor according to claim 8, **characterized in that**: there is a gap between the second section of the fixing sleeve (3) and a bottom of the cavity (10).

10. An electric drive system comprising the motor according to any one of claims 1 to 9.
